# EUROPÄISCHE PATENTSCHRIFT

(11) **EP 1 620 494 B1**
(45) Veröffentlichungstag und Bekanntmachung des Hinweises auf die Patenterteilung: **30.07.2008**
(21) Anmeldenummer: 04724560.0
(22) Anmeldetag: 31.03.2004
(51) Int. Cl.: C08G 85/00

(54) **VERFAHREN ZUR VAKUUMERZEUGUNG BEI DER HERSTELLUNG VON POLYMEREN**
METHOD FOR PRODUCING VACUUM IN THE PRODUCTION OF POLYMERS
PROCEDE D'OBTENTION DE VIDE LORS DE LA PRODUCTION DE POLYMERES

(30) Priorität: 25.04.2003 DE 10318747
(43) Veröffentlichungstag der Anmeldung: 01.02.2006
(73) Patentinhaber: Lurgi Zimmer GmbH, 60295 Frankfurt am Main (DE)
(72) Erfinder: KÄMPF, Rudolf, 63584 Gründau (DE)
(74) Vertreter: Meyer-Dulheuer, Karl-Hermann
(86) Internationale Anmeldenummer: PCT/EP2004/003389
(87) Internationale Veröffentlichungsnummer: WO 2004/096893

(56) Entgegenhaltungen:
- DE-A- 4 440 741

## Beschreibung

Die Erfindung betrifft ein Verfahren zur Vakuumerzeugung und zur Abscheidung von kondensierbaren Bestandteilen aus bei der Herstellung von Polymeren, wie Polyester, Polyarylat, Polyphosphonat, Polysulfon, Polyetherketon und Polycarbonat mittels in mindestens einer Reaktionsstufe unter Vakuum erfolgender Schmelzphasen-Polykondensation anfallenden Brüden, wobei die Saugseite der Reaktionsstufe mit wenigstens einer Dampfstrahl-Vakuumpumpe mit nachgeschaltetem Einspritz-Kondensatorverbunden ist.

Polymere werden wegen ihrer ausgezeichneten mechanisch-technologischen Eigenschaften im Maschinen- und Apparatebau, in der Elektrotechnik, im Bauwesen, in der Textilindustrie, in der Lackindustrie und für Gegenstände des täglichen Bedarfs in großem Umfang verwendet. Die Herstellung erfolgt entweder durch Grenzflächenkondensation oder Schmelzepolykondensation durch direkte Polykondensation aus Dicarbonsäuren und Dialkoholen oder Diphenolen oder durch Umesterung der entsprechenden Säureester. Bei der Anwendung der Schmelzepolykondensation zur Herstellung von Polycarbonaten und Polyphosphonaten werden aromatische Dihydroxy-Verbindungen, z.B. Bis(4-hydroxyphenyl)alkane, insbesondere Bisphenol A, mit Diphenylcarbonat oder Diarylalkylphosphonaten in Gegenwart von Katalysatoren unter Abspaltung von Phenol umgeestert, oligomerisiert und dann der Polykondensation unterworfen. Die Polykondensation erfolgt in mehreren Reaktionsstufen unter fortschreitendem Vakuum, beispielsweise indem mit einem leichten Vakuum von |800| mbar begonnen, für die Vorpolykondensation ein Vakuum von < |100| mbar und für die Polykondensation in der Endstufe ein Vakuum von < |1| mbar in Gegenwart einer Temperatur von 220 bis 350 °C eingestellt wird.

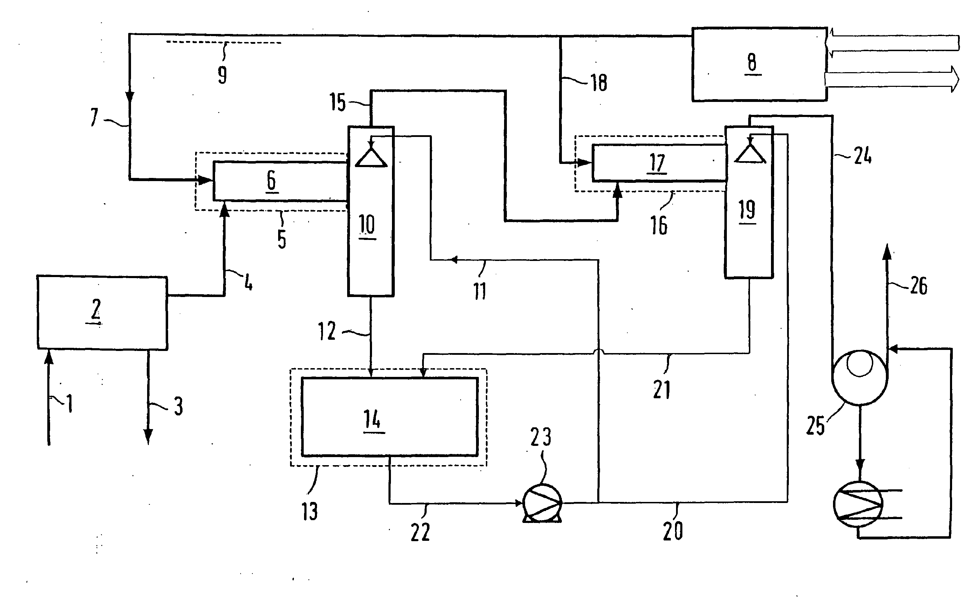

Bei der Erzeugung der Vakua mittels Verdränger-Vakuumpumpen, denen Oberflächenkondensatoren zur Abscheidung der in den bei der Polykondensation entstehenden Brüden enthaltenen kondensierbaren Bestandteile, wie Phenole, mehrwertige Alkohole, Monomere, Oligomere, vor- oder nachgeschaltet sind, schlagen sich die kondensierbaren Bestandteile bei entsprechend niedrigen Kondensationstemperaturen in den Oberflächenköndensatoren und/oder im Pumpen- und Rohrleitungssystem nieder, so dass es zu Betriebsunterbrechungen kommt. Zur Vermeidung dieses Nachteils sind bereits,Kühler mit rotierenden Kratzern zum Abreinigen der Kühlflächen vorgeschlagen worden. Nachteilig ist jedoch, dass von der unter Vakuum stehenden Wellendurchführung eine große Gefahr für Betrieb und Produktqualität im Falle eines Lecks ausgeht. Bekannt ist auch (SRI-Report No. 50B [1982] Polycarbonates, Fig. 5.1) in der Endstufe der Polykondensation unter Beibehaltung eines Oberflächenkondensators das Vakuum mittels zwei hintereinander angeordneten mit Wasserdampf betriebenen Dampfstrahl-Vakuumpumpen zu erzeugen. Durch die dabei, beispielsweise anfallenden Phenole, Dialkohole und Oligomere wird das Abwasser verunreinigt. Darüber hinaus lagern sich die Oligomere in den Dampfstrahl-Vakuumpumpen ab.

In der US-A-3468849 und in der DE-A-2227261 sind Verfahren zur Herstellung von Polyethylenterephthalat (PET) beschrieben, bei denen das Vakuum in der Endstufe der Polykondensation mittels einer mit Ethylenglykol (EG)-Dampf mit einem Druck von ca. |2| bar betriebenen Dampfstrahl-Vakuumpumpe hergestellt wird. EG ist bei Raumtemperatur flüssig und siedet bei einem Druck von |2| bar und einer Temperatur von 222°C, während die monomeren Ausgangsprodukte der Herstellung von Polykarbonaten, Polysulfonen, Polyetherketonen, Polyarylaten und Polyphosphonaten bei Raumtemperatur fest sind und hohe Siedetemperaturen von > 300 °C bei Atmosphärendruck aufweisen; dabei treten teilweise unerwünschte Zersetzungs- und Nebenreaktionen auf. Auch wird bei der Polykondensation von PET das mit dem Treibmittel der Dampfstrahl-Vakuumpumpe und mit dem Monomer identische EG abgespalten und fällt unter Normalbedingungen in flüssiger Form an.

Bei der Polykondensation von Polycarbonaten aus Diphenylcarbonat, von Polyarylaten aus Dicarbonsäuren, von Polyphosphonaten aus Bisphenolen und/oder andern Phenylestem bildet sich das von den Monomeren oder den Spaltprodukten aus der Umesterungsreaktion der Herstellung von Polyestern verschiedene Phenol, das toxisch ist und bei Unterschreiten einer Temperatur von 41 °C fest wird. Diese Eigenschaften beeinträchtigen die Sicherheit von Betrieb und Personal und verursachen Korrosionserscheinungen.

Gegenstand der DE-A-4440741 ist ein Verfahren zur Vakuumerzeugung und Abscheidung der kondensierbaren Bestandteile aus den Brüden der Schmelzphasen-Polykondensation bei der Herstellung von Polycarbonat. Bei diesem Verfahren wird die Saugseite einer Polykondensationsstufe an mindestens je ein bis zwei Dampfstrahl-Vakuumpumpen mit nachgeschaltetem Einspritz-Kondensator angeschlossen. Als Treibmittel wird dampfförmiges Diphenylcarbonat mit einem Druck von |0,3| bis |1,5| bar und als Sprühflüssigkeit flüssiges Diphenylcarbonat eingesetzt. Dieses Verfahren ermöglicht eine vorteilhafte Erzeugung von Vakuum in einer oder mehreren der Reaktionsstufen bei der Herstellung von Polycarbonat durch Schmelzphasen-Polykondensation. Betriebsunterbrechungen durch Ablagerung von Oligomeren oder durch Sättigung von Flächenkondensatoren sind praktisch ausgeschlossen. Zu entsorgende Emissionen sind auf ein Minimum reduziert, insbesondere fallen keine mit Phenol, Oligomeren und Monomeren verunreinigte Abwässer an.

Ausgehend von diesem Stand der Technik ist es Aufgabe vorliegender Erfindung, den energetischen Wirkungsgrad des eingangs beschriebenen Verfahrens zu verbessern.

Gelöst ist diese Aufgabe dadurch, dass die Dampfstrahl-Vakuumpumpe mit aus wenigstens einem dampfförmigen Alkylencarbonat und/oder wenigstens einem dampfförmigen Dialkylcarbonat bestehenden Treibmittel und der Einspritz-Kondensator mit aus wenigstens einem flüssigen Alkylencabonat und/oder wenigstens einem flüssigen Dialkylcarbonat bestehenden Kühlmittel beaufschlagt werden.

Zur Lösung der erfindungsgemäßen Aufgabe ist ganz besonders Ethylencarbonat trotz einer Schmelztemperatur von ca. 37 °C und einer Siedetemperatur von ca. 248 °C bei einem Druck von |1| bar in der Dampfform als Treibmittel für die Dampfstrahl-Vakuumpumpe und in der Flüssigkeitsform als Sprühmittel für den Einspritz-Kondensator zur Sprühkondensation der hochsiedenden Bestandteile der Brüden geeignet. Überraschenderweise wurde gefunden, dass Ethylencarbonat zur Unterkühlung neigt und bei Temperaturen weit unter dem Gefrierpunkt von Wasser erst kristallisiert und somit analog den Alkylcarbonaten, wie Propylen- und Butylencarbonat in Vakuumerzeugungsanlagen einsetzbar ist.

Das für den Betrieb der Dampfstrahl-Vakuumpumpe verwendete dampfförmige Treibmittel besitzt einen Druck von |0,3| mbar bis |9| bar. Zur Erzielung eines relativ hohen energetischen Wirkungsgrads sollte der Treibdampf einen möglichst hohen Druck aufweisen. Je nach Dimensionierung der Anlage zur Herstellung von Polyester, Polyarylat, Polyphosphonat, Polysulfon, Polyetherkaton oder Polycarbonat kann eine thermisch schonende Fahrweise bei einem Druck von |0.5| mbar bis |1| bar angebracht sein. Bei relativ hohen Drücken genügt pro Reaktionsstufe in aller Regel der Einsatz einer Dampfstrahl-Vakuumpumpe, während bei relativ niedrigen Drücken zwei Dampfstrahl-Vakuumpumpen einem Einspritz-Kondensator vorgeschaltet sind. Die Temperatur des Treibdampfs entspricht der Siedetemperatur des Ethylen-, Propylen- und Alkylencarbonats bei gegebenem Druck.

Um die Abscheidung kondensierbarer Bestandteile der Brüden in der Dampfstrahl-Vakuumpumpe zu vermeiden, ist eine Überhitzung des Treibdampfs vor dem Eintritt in die Dampfstrahl-Vakuumpumpe um 1 bis 100 °C, vorzugsweise 3 bis 25 °C angebracht.

Das die Dampfstrahl-Vakuumpumpe verlassende dampfförmige Gemisch, das aus Treibmittel, aus den Spaltprodukten der Polykondensation und Umesterung, wie Phenol, Dialkohol und anderen Stoffen und aus in den Brüden der Polykondensation enthaltenem oligomeren Polycarbonat, anderem oligomeren Polymer und Monomeren besteht, wird in den an die Dampfstrahl-Vakuumpumpe unmittelbar anschließenden Einspritz-Kondensator geleitet und daraus durch Besprühen mit flüssigem Alkylencarbonat die kondensierbaren Bestandteile abgeschieden. Je nach Reinheit des Sprühmittels sollte dessen Temperatur mit 10 bis 200 °C, vorzugsweise 25 bis 150 °C möglichst niedrig sein, um eine maximale Abscheidung der kondensierbaren Bestandteile zu erreichen.

Im Rahmen der Ausgestaltung der Erfindung wird ein Teilmengenstrom des aus dem Einspritz-Kondensator abfließenden Kondensats unter entsprechender Temperierung als Sprühmittel in den Einspritz-Kondensator zurückgeführt, ein weiterer Teilmengenstrom wird dem Verdampfer zur Erzeugung des Treibmittels zugeleitet und der Restmengenstrom ausgeschleust und prozessintern rückgeführt oder einer Rückgewinnungsanlage zugeführt. Dadurch wird eine Anreicherung von Oligomeren, Monomeren und Spaltprodukten der Polykondensation oder Umesterung vermieden. Die Kondensate mehrerer Einspritz-Kondensatoren können zunächst zusammengeführt und erst danach in die entsprechenden Teilmengenströme aufgeteilt werden.

Die aus dem ersten Einspritz-Kondensator austretende Dampfphase weist einen entsprechend dem Verdichtungsverhältnis des oder der vorgeschalteten Dampfstrahl-Vakuumpumpe(n) gegenüber dem Druck in der Polykondensationsstufe größeren Druck auf. Die weitere Verdichtung der Dampfphase kann durch eine oder auch mehrere jeweils aus Dampfstrahl-Vakuumpumpe und Einspritz-Kondensator gebildete nachgeordnete Verdichtungsstufen erfolgen. Es ist auch möglich, eine oder mehrere der aus Dampfstrahl-Vakuumpumpe und Einspritzkondensator bestehenden nachgeordneten Verdichtungsstufen durch mechanische Vakuumpumpen, wie Vakuumgebläse und Flüssigkeitsringpumpe zu ersetzen. Als Betriebsflüssigkeit für die Flüssigkeitsringpumpe kann Kondensat aus dem Einspritz-Kondensator oder ein flüssiges Alkylencarbonat oder ein Gemisch aus flüssigen Alkylencarbonaten oder Dialkylcarbonaten verwendet werden. Bei Bedarf können Wärmetauscher und/oder Kondensatoren zwischengeschaltet werden. Mit diesen weiteren Verdichtungsstufen kann gleichzeitig das Vakuum für die vorangehenden Polykondensationsstufen erzeugt werden. Soweit mechanische Vakuumpumpen eingesetzt werden, können diese auch zur gleichzeitigen Erzeugung des Vakuums der Umesterungsstufe herangezogen werden. Ein weiterer Teilstrom des Kondensats aus den Einspritz-Kondensatoren wird dem Verdampfer zur Erzeugung des Treibmittels für die Dampfstrahl-Vakuumpumpen zugeführt. Der Verdampfer kann auch ausschließlich mit reinem Alkylencarbonat ohne Rückführung von Kondensat betrieben werden. Der Betriebsdruck des Verdampfers ist entsprechend dem Druckverlust in den Rohrleitungen und Armaturen geringfügig größer als der Druck des Treibmittels. Bei mehreren Verdichtungsstufen wird der aus dem Verdampfer austretende Treibmittelstrom in entsprechend der Zahl der Verdichterstufen Teilströme aufgeteilt. Der Sumpf des Verdampfers wird kontinuierlich partiell ausgeschleust und gfls. wiederverwertet.

Da die bei diesem Verfahren eingesetzten Alkylencarbonate einen wesentlich höheren Siedepunkt als die eingesetzten Phenole aufweisen, ist eine einfache destillative Trennung möglich. Das erfindungsgemäße Verfahren erlaubt eine störungsfreie und ökonomische Erzeugung des Vakuums für eine oder mehrere Polykondensations-Reaktionsstufen bei der Herstellung von Polyester, Polyphosphonat, Polysulfon, Polyetherketon, Polyarylat und Polycarbonat durch Schmelzphasen-Polykondensation. Betriebsunterbrechungen durch Ablagerung von Oligomeren sind praktisch ausgeschlossen. Sämtliche Wertstoffe werden prozessintern rezirkuliert. Zu entsorgende Emissionen sind auf ein Minimum reduziert, insbesondere fallen keine mit Phenol, Oligomeren und Monomeren verunreinigte Abwässer an.

Das erfindungsgemäße Verfahren wird durch das in der Zeichnung dargestellte Fließbild näher und beispielhaft erläutert.

Über Leitung (1) wird das aus einem nicht dargestellten Vorpolykondensationsreaktor ausgetragene Produkt dem Polykondensationsreaktor (2) zugeführt, in dem eine Temperatur von 295 °C und ein Druck von |2| mbar herrschen; über Leitung (3) wird das Polymer aus dem Polykondensationsreaktor (2) ausgeleitet. Die Saugseite des Polykondensationsreaktors (2) ist über Leitung (4) mit der mit einer Begleitheizung (5) versehenen Dampfstrahl-Vakuumpumpe (6) verbunden, die mit über Leitung (7) aus dem Verdampfer (8) zugeleitetem Ethylencarbonatdampf angetrieben wird. Um einen Niederschlag von im Ethylencarbonatdampf enthaltenen Bestandteilen im Bereich der Dampfstrahl-Vakuumpumpe (6) zu vermeiden, kann der Ethylencarbonatdampf mit einer die Leitung (7) umschließenden Begleitheizung (9) überhitzt werden. Das die Dampfstrahl-Vakuumpumpe (6) verlassende dampfförmige Gemisch aus Ethylencarbonatdampf und den Phenol, oligomeres Polycarbonat und Monomere enthaltenden Brüden der Polykondensation wird in einen unmittelbar anschließenden Einspritz-Kondensator (10) geleitet, in dem durch Besprühen mit über Leitung (11) zugeführtem flüssigen eine Temperatur von 40 °C aufweisenden Ethylencarbonat die kondensierbaren Bestandteile abgeschieden werden. Das über Leitung (12) aus dem Einspritz-Kondensator (10) ausgetragene Kondensat fließt in einen mit einer Begleitheizung (13) versehenen Kondensatsammler (14). Die am Kopf des Einspritz-Kondensators (10) austretende Dampfphase strömt über Leitung (15) zu der mit einer Begleitheizung (16) versehenen Dampfstrahl-Vakuumpumpe (17), die mit über die von der Leitung (9) abzweigenden Leitung (18) zugeführtem Ethylencarbonatdampf angetrieben wird. Das aus der Dampfstrahl-Vakuumpumpe (17) austretende dampfförmige Gemisch aus Ethylencarbonatdampf und den phenolhaltigen Brüden der Polykondensation wird einem Einspritz-Kondensator (19) aufgegeben und in diesem mit über Leitung (20) zugeführtem Kondensat besprüht. Das über Leitung (21) den Einspritz-Kondensator (19) verlassende Kondensat fließt in den Kondensatsammler (14). Das über Leitung (22) aus dem Kondensatsammler (14) abfließende Kondensat wird mit Hilfe des Pumpenaggregats (23) über Leitungen (11) bzw. (20) den Einspritz-Kondensatoren (10) bzw. (19) zugeleitet. Die über den Kopf des Einspritz-Kondensators (19) austretende Dampfphase strömt über Leitung (24) zu einer Flüssigkeitsringpumpe (25), mittels der das Abgas über Leitung (26) aus dem Prozess ausgeleitet wird.

## Patentansprüche

1. Verfahren zur Vakuumerzeugung und zur Abscheidung von kondensierbaren Bestandteilen aus bei der Herstellung von Polymeren, wie Polyester, Polyarylat, Polyphosphonat, Polysulfon, Polyetherketon und Polycarbonat mittels in mindestens einer Reaktionsstufe (2) unter Vakuum erfolgender Schmelzphasen-Polykondensation anfallenden Brüden, wobei die Saugseite der Reaktionsstufe mit wenigstens einer Dampfstrahl-Vakuumpumpe (6,17) mit nachgeschaltetem Einspritz-Kondensator (10) verbunden ist, **dadurch gekennzeichnet, dass** die Dampfstrahl-Vakuumpumpe (6,17) mit aus wenigstens einem dampfförmigen Alkylencarbonat und/oder wenigstens einem dampfförmigen Dialkylcarbonat bestehenden Treibmittel und der Einspritz-Kondensator (10,19) mit aus wenigstens einem flüssigem Alkylencarbonat und/oder wenigstens einem flüssigen Dialkylcarbonat bestehenden Kühlmittel beaufschlagt werden.

2. Verfahren nach Anspruch 1, **dadurch gekennzeichnet, dass** bei einer in mehreren Reaktionsstufen (2) erfolgenden Schmelzphasen-Polykondensation die letzte Reaktionsstufe mit einer Dampfstrahl-Vakuumpumpe (6,17) mit nachgeschaltetem Einspritz-Kondensator (10,19) verbunden ist.

3. Verfahren nach Anspruch 1, **dadurch gekennzeichnet, dass** bei einer in mehreren Rektionsstufen (2) erfolgenden Schmelzphasen-Polykondensation die letzte Reaktionsstufe und wenigstens eine der vorhergehenden Reaktionsstufen mit einer Dampfstrahl-Vakuumpumpe (6,17) mit nachgeschaltetem Einspritz-Kondensator (10,19) verbunden ist.

4. Verfahren nach einem der Ansprüche 1 bis 3, **dadurch gekennzeichnet, dass** als Alkylenkarbonat, vorzugsweise Ethylenkarbonat und Propylencarbonat eingesetzt wird.

5. Verfahren nach einem der Ansprüche 1 bis 4, **dadurch gekennzeichnet, dass** als Dialkylcarbonat, vorzugsweise Dimethylcarbonat und Diethylcarbonat eingesetzt wird.

6. Verfahren nach einem der Ansprüche 1 bis 5, **dadurch gekennzeichnet, dass** der Druck des Treibmittels |0,3| mbar bis |9| bar, vorzugsweise |5| mbar bis |1| bar beträgt.

7. Verfahren nach einem der Ansprüche 1 bis 6, **dadurch gekennzeichnet, dass** das dampfförmige Treibmittel vor dem Eintritt in die Dampfstrahl-Vakuumpumpe (6,17) um 1 bis 100 °C, vorzugsweise 3 bis 25 °C überhitzt wird.

8. Verfahren nach einem der Ansprüche 1 bis 7, **dadurch gekennzeichnet, dass** die Temperatur des Kühlmittels 10 bis 200 °C, vorzugsweise 25 bis 150 °C beträgt.

9. Verfahren nach einem der Ansprüche 1 bis 8, **dadurch gekennzeichnet, dass** die Druckseite wenigstens eines Einspritz-Kondensators (19) mit einer Verdränger-Vakuumpumpe (25), vorzugsweise einer Flüssigkeits-Ringpumpe, verbunden ist.

10. Verfahren nach einem der Ansprüche 1 bis 9, **dadurch gekennzeichnet, dass** von der anfallenden Kondensatmenge eine erste Teilmenge in den Einspritz-Kondensator (10,19) zurückgeführt, eine zweite Teilmenge einem Verdampfer (8) zur Erzeugung des Treibmittels zugeführt und die Restmenge prozessintern zurückgeführt oder einer Rückgewinnungsanlage zugeleitet wird.

## Claims

1. A method for creating a vacuum and for deposition of condensable constituents from vapors formed in the production of polymers such as polyester, polyacrylate, polyphosphonate, polysulfone, polyether ketone and polycarbonate by melt-phase polycondensation performed in vacuo in at least one reaction step (2), whereby the suction side of the reaction step is connected to at least one vapor-jet vacuum pump (6, 17) with a downstream spray condenser (10), **characterized in that** the vapor-jet vacuum pump (6, 17) is acted upon by a fuel consisting of at least one alkylene carbonate in vapor form and/or at least one dialkyl carbonate in vapor form and the spray condenser (10, 19) is acted upon by coolant consisting of at least one liquid alkylene carbonate and/or at least one liquid dialkyl carbonate.

2. The method according to Claim 1, **characterized in that** in a melt-phase polycondensation taking place in multiple reaction steps (2), the last reaction step is connected to a vapor-jet vacuum pump (6, 17) with a downstream spray condenser (10, 19).

3. The method according to Claim 1, **characterized in that** in a melt-phase polycondensation taking place in multiple reaction steps (2), the last reaction step and at least one of the preceding reaction steps is connected to a vapor-jet vacuum pump (6, 17) with a downstream spray condenser (10, 19).

4. The method according to any one of Claims 1 to 3, **characterized in that** preferably ethylene carbonate and propylene carbonate are used as the alkylene carbonate.

5. The method according to any one of Claims 1 to 4, **characterized in that** dimethyl carbonate and diethyl carbonate are preferably used as the dialkyl carbonate.

6. The method according to any one of Claims 1 to 5, **characterized in that** the pressure of the fuel is |0.3| mbar to |9| bar, preferably |5| mbar to |1| bar.

7. The method according to any one of Claims 1 to 6, **characterized in that** the vapor phase fuel is superheated by 1°C to 100°C, preferably 3°C to 25°C before its admission to the vapor-jet vacuum pump (6, 17).

8. The method according to any one of Claims 1 to 7, **characterized in that** the temperature of the coolant is 10°C to 200°C, preferably 25°C to 150°C.

9. The method according to any one of Claims 1 to 8, **characterized in that** the pressure side of at least one spray condenser (19) is connected to a displacement vacuum pump (25), preferably a liquid ring pump.

10. The method according to any one of Claims 1 to 9, **characterized in that** a first partial amount of the resulting condensate amount is returned to the spray condenser (10, 19), a second partial amount is sent to an evaporator (8) to create the fuel and the remaining amount is recycled within the process or is sent to a recovery system.

## Revendications

1. Procédé pour la création de vide et pour la séparation de composants condensables à partir de fumées produites lors de la fabrication de polymères, tels que du polyester, du polyarylate, du polyphosphonate, du polysulfone, du polyéthercétone et du polycarbonate, au moyen d'une polycondensation à phase de fonte effectuée sous vide dans au moins une étape de réaction (2), le côté aspiration de l'étape de réaction étant relié avec au moins une pompe à vide à jet de vapeur (6, 17) avec condensateur d'injection (10) monté en aval, **caractérisé en ce que** la pompe à vide à jet de vapeur (6, 17) est soumise à un agent propulseur consistant dans au moins un carbonate d'alkylène à l'état de vapeur et/ou dans au moins un carbonate de dialkyle à l'état de vapeur et le condensateur d'injection (10, 19) est soumis à un agent réfrigérant consistant dans au moins un carbonate d'alkylène liquide et/ou au moins un carbonate de dialkyle liquide.

2. Procédé selon la revendication 1, **caractérisé en ce que** lors d'une polycondensation à phase de fonte effectuée en plusieurs étapes de réaction (2), la dernière étape de réaction est reliée avec une pompe à vide à jet de vapeur (6, 17) avec un condensateur d'injection (10, 19) monté en aval.

3. Procédé selon la revendication 1, **caractérisé en ce que** lors d'une polycondensation à phase de fonte effectuée en plusieurs étapes de réaction (2), la dernière étape de réaction et au moins l'une des étapes de réaction précédente est reliée avec une pompe à vide à jet de vapeur (6, 17) avec un condensateur d'injection (10, 19) monté en aval.

4. Procédé selon l'une quelconque des revendications 1 à 3,
**caractérisé en ce que** l'on utilise en tant que carbonate d'alkylène, de préférence du carbonate d'éthylène et du carbonate de propylène.

5. Procédé selon l'une quelconque des revendications 1 à 4, **caractérisé en ce que** l'on utilise en tant que carbonate de dialkyle de préférence du carbonate de diméthyle et du carbonate de diéthyle.

6. Procédé selon l'une quelconque des revendications 1 à 5, **caractérisé en ce que** la pression de l'agent propulseur est de |0,3| mbar à |9| bar, de préférence de |5| mbar à |1| bar.

7. Procédé selon l'une quelconque des revendications 1 à 6, **caractérisé en ce que** avant l'entrée dans la pompe à vide à jet de vapeur (6, 17) l'agent propulseur sous forme de vapeur est surchauffé de 1 à 100 °C, de préférence de 3 à 25 °C.

8. Procédé selon l'une quelconque des revendications 1 à 7, **caractérisé en ce que** la température du réfrigérant s'élève à de 10 à 200 °C, de préférence à de 25 à 150 °C.

9. Procédé selon l'une quelconque des revendications 1 à 8, **caractérisé en ce que** le côté pression d'au moins un condensateur d'injection (19) est relié à une pompe à vide volumétrique (25), de préférence une pompe annulaire à liquide.

10. Procédé selon l'une quelconque des revendications 1 à 9, **caractérisé en ce que** sur la quantité produite de condensats, une première quantité partielle est recyclée dans le condensateur d'injection (10, 19), une deuxième quantité partielle est amenée vers un évaporateur (8) pour la création de l'agent propulseur et la quantité résiduelle est recyclée en interne au processus ou dirigée vers une installation de récupération.
